# EUROPEAN PATENT SPECIFICATION

(11) **EP 0 916 862 B1**
(45) Date of publication and mention of the grant of the patent: **30.06.2004**
(21) Application number: 98850171.4
(22) Date of filing: 06.11.1998
(51) Int. Cl.: F16C 35/073, B63H 23/32

(54) **Propeller thrust bearing**
Propelleraxiallager
Palier axial d'hélice

(30) Priority: 13.11.1997 SE 9704203
(43) Date of publication of application: 19.05.1999
(73) Proprietor: Aktiebolaget SKF, S-415 50 Göteborg (SE)
(72) Inventor: Manne, Nils, 418 72 Göteborg (SE); Bildtsén, Christian, 443 35 Lerum (SE)
(74) Representative: Westman, Per Börje Ingemar

(56) References cited:
- DE-A- 3 112 306
- GB-A- 345 245
- US-A- 3 751 124
- US-A- 4 893 948
- PATENT ABSTRACTS OF JAPAN vol. 12, no. 208 (M-709), 15 June 1988 (1988-06-15) & JP 63 011498 A (KOBE STEEL), 18 January 1988 (1988-01-18)

## Description

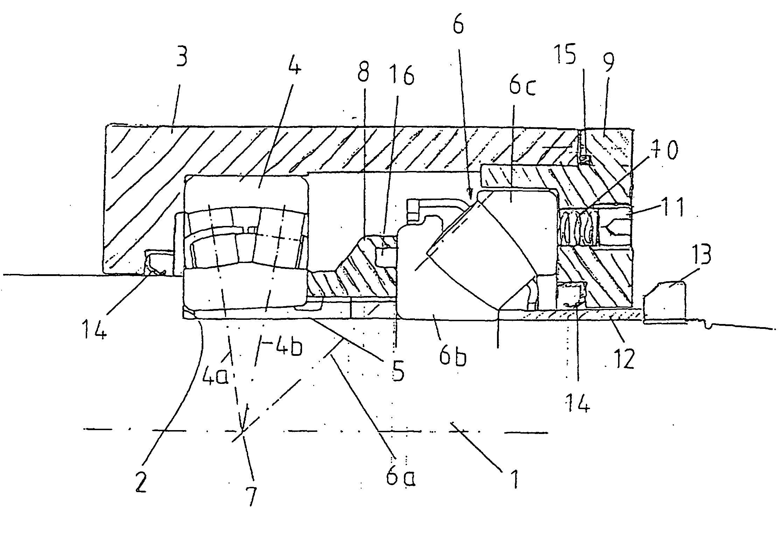

The present invention relates to a thrust bearing assembly particularly for a ship's propeller, reference being made to the accompanying drawing showing schematically in a partial view and in cross section the bearing assembly according to the invention.

At earlier bearing assemblies of this type has usually been used a shaft having several raised cylindrical portions, which have served as bearing seats for a double-row spherical roller bearing and for the shaft washer of a spherical roller thrust bearing. The spherical roller bearing thereby has been mounted directly upon such a raised cylindrical shaft at a close fit whereas the shaft washer of the spherical roller thrust bearing is mounted on another such raised portion, usually at a looser fit than the first bearing, and with means, which from the outside are urging the housing washer and the set of rollers against the shaft washer. In order to obtain a correct distance between the two bearings has been used a spacing ring, which is positioned in a deeper portion of the shaft between the two bearing seats, and which spacing ring for this reason has to be split. Beside from the fact, that the shaft which is provided with several such raised portions means a time-wasting and expensive machining at manufacture of the shaft, there is also big problems at mounting and especially at dismounting of such a bearing assembly. The complex structural design means that dismounting requires many different tools and aids, at the same time as the bearing exchange and over-hauling must often be effected during hard working conditions in the ship.

DE-A-3 112 306 discloses a propeller thrust bearing assembly according to the preamble of claim 1.

The purpose of the present invention is to provide such a propeller thrust bearing and a method for its dismounting, which is not effected by the above mentioned drawbacks, and the characterizing features of the bearing assembly is substantially evident from the characterizing part of the accompanying claim 1, whereas the features substantially characterizing the dismounting method are defined by the steps of accompanying claim 5.

As shown in the drawing, the assembly incorporates a shaft 1 having a cylindrical shape and a shoulder 2. A sleeve-shaped housing portion 3 is arranged over the shaft 1, and thereupon a double row spherical roller bearing 4 with a taper bore and arranged on a withdrawal sleeve 5 is driven on the shaft 1. Thereby the withdrawal sleeve 5 can be pushed inwards via the intermediary of a not shown tubular tool. On the shaft 1 is further mounted a spherical roller thrust bearing 6. The two bearings 4 and 6 shall cooperate in such a manner that the force lines 4a, 4b, from the two rows of rollers in the double row spherical bearing and the force line 6a from the rollers in the spherical roller thrust bearing meet in a point 7 on the shaft axis. As the measures of the different bearings can be gathered from standard bearing catalogues, it is easy to establish the correct distance between the two bearings, when the assembly is mounted in correct manner.

For obtaining this, a spacing sleeve 8 of correct axial length is introduced in the housing 3. The spacing sleeve 8 has internal threads and it is manually screwed up on the threads of the withdrawal sleeve 5, until the front edge of the spacing sleeve 8 abuts the rear side of the first mounted double-row spherical roller bearing 4. Thereupon the shaft washer 6b and the set of rollers of the thrust bearing 6 is pushed up on the shaft until the shaft washer abuts the rear end of the spacing sleeve 8. In this position the shaft washer is in correct position and the housing washer 6c is fitted and a lid member 9 is attached to the housing 3, thus forming an end closure for the housing. Means are provided for keeping the housing washer pressed against the set of rollers in the spherical roller thrust bearing, and which means can preferably be a spring 10, the spring force of which can be adjusted via a set screw 11. A tubular member 12 is arranged to keep the shaft washer 6b in position against the spacing sleeve 8, and this tubular member 12, and the entire assembly is held together by means of a lock nut 13 screwed onto threads on the shaft 1.

The bearing assembly is preferably oil-lubricated and in the drawing it is equipped with appropriate seals 14 for this purpose. A sealing member 15 is also arranged between the housing 3 and its lid member 9.

The shaft washer 6b of the spherical roller thrust bearing is preferably fitted to the shaft 1 with a loose fit.

When the bearing assembly shown in the drawing and described hereabove, shall be dismounted, it is easy to unscrew the lock nut 13. Thereupon the set screw 11 is untightened, whereupon it is easy to remove the lid member 9. The housing washer 6c of the spherical roller thrust bearing 6 then can be easily removed. Thereupon it is easy to reach with a conventional withdrawal tool behind the inner side face of the shaft washer 6b and to withdraw it out from the housing, whereupon the outer side face of the spacing sleeve 8 is exposed. This side face has a number of grips 16 in which can be inserted a not shown tool by which the spacing sleeve can be rotated on the withdrawal sleeve 5. The grips 16 are preferably at least two, diametrically spaced apart recesses in the sleeve side face, and the tool is preferably a tubular member, which can be inserted over the shaft and with projections corresponding to the recesses, and which can be correctly and easily connected to the recesses as said tubular tool member is centred and guided on the shaft.

With such a tool the spacing sleeve 8 can easily be screwed inwards, whereby the inner race ring of the double-row spherical roller bearing will prevent such motion by being clamped between the shoulder 2 and the spacing sleeve 8. The effect of this will be that the withdrawal sleeve 5 is instead pulled out from its position between the cylindrical shaft 1 and the taper bore of the bearing 4, thereby gradually making the grip between this bearing and the shaft cease, whereupon the spacing sleeve 8, the withdrawal sleeve 5 and the double-row spherical roller bearing can be easily picked out from the housing 3.

## Claims

1. A propeller thrust bearing assembly of the type incorporating a spherical rolling bearing (4) provided on a shaft (1) and abutting a shoulder (2), and a spherical thrust bearing (6), incorporating a shaft washer (6b) fitted on the shaft, a housing washer (6c) provided in a housing (3) surrounding the shaft and a set of rolling bodies provided between the shaft washer and the housing washer, a spacing sleeve provided between the spherical rolling bearing (4) and the spherical thrust bearing, and a lid member (9) attached to the housing (3) and adapted to urge the housing washer (6c) against the set of rolling bodies and via this against the shaft washer (6b), whereby the axial distance between the two bearings (4, 6) is such that their force lines (4a, 4b; 6a) meet in a point (7) situated on the centre axis of the shaft, wherein a tubular member (12) is arranged about the shaft (1) and is adapted to keep the shaft washer (6b) pressed against the rear end of the spacing sleeve (8) facing away from the spherical rolling bearing (4), which tubular member (12) is secured in position by means of a locking nut (13) screwed onto threads of the shaft,
**characterized in**
**that** the spherical rolling bearing (4) has a taper bore and is mounted on a corresponding tapered portion of a withdrawal sleeve (5), that the spacing sleeve (8) has internal threads and is screwed onto an external thread on the withdrawal sleeve (5).

2. The propeller thrust bearing as claimed in claim 1,
**characterized therein,**
that the spacing sleeve (8) at its rearmost end surface has recesses (16), forming a grip for a tool by means of which the spacing sleeve (8) is rotatable for its screwing in either direction along the threads of the withdrawal sleeve.

3. The propeller thrust bearing as claimed in anyone of claims 1 or 2,
**characterized therein,**
that the shaft washer (6b) of the spherical thrust bearing (6) is arranged with a loose fit on the shaft (1).

4. The propeller thrust bearing as claimed in anyone of claims 1 or 2,
**characterized therein,**
that the shaft (1) is completely smooth between the shoulder (2) and shaft threads present on the shaft.

5. A process for dismounting a propeller thrust bearing assembly as claimed in anyone of the preceeding claims and incorporating a spherical rolling bearing (4) provided on a shaft (1) and abutting a shoulder (2), and a spherical thrust bearing (6), incorporating a shaft washer (6b) fitted on the shaft, a housing washer (6c) provided in a housing (3) surrounding the shaft and a set of rolling bodies provided between the shaft washer and the housing washer, a spacing sleeve provided between the spherical rolling bearing (4) and the spherical thrust bearing, and a lid member (9) attached to the housing (3) and adapted to urge the housing washer (6c) against the set of rolling bodies and via this against the shaft washer (6b), whereby the axial distance between the two bearings (4, 6) is such that their force lines (4a, 4b; 6a) meet in a point (7) situated on the centre axis of the shaft, and where the spherical rolling bearing (4) has a taper bore and is mounted on a withdrawal sleeve (5), whereby the spacing sleeve (8) has internal threads and is screwed onto an external thread on the withdrawal sleeve (5), and a tubular member (12) is arranged about the shaft (1) and is adapted to keep the shaft washer (6b) pressed against the rear end of the spacing sleeve (8) facing away from the spherical rolling bearing (4), which tubular member (12) is secured in position by means of a locking nut (13) screwed onto threads of the shaft,
the process comprising the steps :
first unscrewing the locking nut (13),
pulling out the lid member (9) and the housing washer (6c) axially,
thereupon removing the shaft washer (6b) and the set of rolling bodies axially,
thereupon screwing the spacing sleeve (8), the outwardly facing surface of which has now been exposed, in a direction inwards, whereby its thread engagement with the withdrawal sleeve (5) results in that this is pulled axially outwards from its position within the inner race ring of the spherical rolling bearing (4), whereby the clamping function of its inner race ring ceases, and the spacing sleeve (8) together with the withdrawal sleeve (5) and the spherical rolling bearing (4) can be pulled out.

6. A process as claimed in claim 5,
**characterized therein,**
that the shaft washer (6b) after removal of the housing washer (6c), is pulled out axially by means of a conventional withdrawal tool, the claws of which can be easily inserted inside the inner side face plane of the shaft washer.

## Patentansprüche

1. Axiallagervorrichtung für einen Propeller einer Art mit einem Pendelrollenlager (4), das auf einer Welle (1) vorgesehen ist und an einem Absatz (2) anliegt, und einem Axialpendelrollenlager (6), das einen Wellenring (6b), der auf der Welle sitzt, einen Gehäusering (6c), der in einem Gehäuse (3) vorgesehen ist, das die Welle umgibt, und einen Satz Wälzkörper umfaßt, die zwischen dem Wellenring und dem Gehäusering vorgesehen sind, wobei eine Abstandshülse zwischen dem Pendelrollenlager (4) und dem Axialpendelrollenlager vorgesehen ist, ein Deckelelement (9) an dem Gehäuse (3) angebracht und so beschaffen ist, daß es den Gehäusering (6c) gegen den Satz Wälzkörper und über diesen gegen den Wellenring (6b) drückt, und der Axialabstand zwischen den beiden Lagern (4, 6) so ist, daß sich ihre Kraftlinien (4a, 4b; 6a) in einem Punkt (7) treffen, der auf der Mittelachse der Welle liegt, sowie weiterhin ein röhrenförmiges Element (12) um die Welle (1) angeordnet und so beschaffen ist, daß es den Wellenring (6b) gegen das hintere, von dem Pendelrollenlager (4) wegweisende Ende einer Abstandshülse (8) angedrückt hält, wobei das röhrenförmige Element (12) mit Hilfe einer Schließmutter (13) in Position gehalten ist, die auf ein Gewinde der Welle aufgeschraubt ist, **dadurch gekennzeichnet, daß** das Pendelrollenlager (4) eine Kegelbohrung aufweist und auf einem entsprechend geneigten Bereich einer Abziehhülse (5) montiert ist und daß die Abstandshülse(8) ein Innengewinde besitzt und auf ein Außengewinde auf der Abziehhülse (5) aufgeschraubt ist.

2. Axiallager für einen Propeller nach Anspruch 1, **dadurch gekennzeichnet, daß** die Abstandshülse (8) an ihrer hinteren Stirnfläche Ausnehmungen (16) besitzt, die einen Griff für ein Werkzeug bilden, mit Hilfe dessen die Abstandshülse (8) drehbar zum Schrauben in beliebiger Richtung entlang des Gewindes der Abzugshülse ist.

3. Axiallager für einen Propeller nach einem der Ansprüche 1 oder 2, **dadurch gekennzeichnet, daß** der Wellenring (6b) des Axialpendelrollenlagers (6) mit Spielpassung auf der Welle (1) angeordnet ist.

4. Axiallager für einen Propeller nach einem der Ansprüche 1 oder 2, **dadurch gekennzeichnet, daß** die Welle (1) zwischen dem Absatz (2) und dem auf der Welle vorhandenen Wellengewinde vollständig glatt ist.

5. Verfahren zur Demontage einer Axiallagervorrichtung für einen Propeller nach einem der vorhergehenden Ansprüche, die ein Pendelrollenlager (4), das auf einer Welle (1) vorgesehen ist und an einem Absatz (2) anliegt, und ein Axialpendelrollenlager (6) besitzt, das einen Wellenring (6b), der auf der Welle sitzt, einen Gehäusering (6c), der in einem Gehäuse (3) vorgesehen ist, das die Welle umgibt, und einen Satz Wälzkörper umfaßt, die zwischen dem Wellenring und dem Gehäusering vorgesehen sind, wobei eine Abstandshülse zwischen dem Pendelrollenlager (4) und dem Axialpendelrollenlager vorgesehen ist, ein Deckelelement (9) an dem Gehäuse (3) angebracht und so beschaffen ist, daß es den Gehäusering (6c) gegen den Satz Wälzkörper und über diesen gegen den Wellenring (6b) drückt, der Axialabstand zwischen den beiden Lagern (4, 6) so ist, daß sich deren Kraftlinien (4a, 4b; 6a) in einem Punkt (7) treffen, der auf der Mittelachse der Welle liegt, und das Pendelrollenlager (4) eine Kegelbohrung besitzt und auf einer Abziehhülse (5) montiert ist, wobei eine Abstandshülse (8) ein Innengewinde besitzt und auf ein Außengewinde auf der Abziehhülse (5) aufgeschraubt ist und ein röhrenförmiges Element (12) um die Welle (1) angeordnet und so beschaffen ist, daß es den Wellenring (6b) gegen das hintere, von dem Pendelrollenlager (4) wegweisende Ende der Abstandshülse (8) angedrückt hält, wobei das röhrenförmige Element (12) mittels einer Schließmutter (13) in Position gehalten ist, die auf ein Gewinde der Welle aufgeschraubt ist, wobei das Verfahren folgende Schritte aufweist:
ein anfängliches Losschrauben der Schließmutter (13),
axiales Herausziehen des Deckelelements (9) und des Gehäuserings (6c),
ein darauf folgendes axiales Entfernen des Wellenrings (6b) und des Satzes Wälzkörper,
ein darauf folgendes Einschrauben der Abstandshülse (8), deren nach außen weisende Fläche nunmehr freigelegt ist, in einer Einwärtsrichtung, wobei ihr Gewindeeingriff mit der Abziehhülse (5) dazu führt, daß diese axial aus ihrer Stellung innerhalb des inneren Laufrings des Pendelrollenlagers (4) axial herausgezogen wird, wodurch die Klemmwirkung auf dessen inneren Laufring abnimmt und die Abstandshülse (8) zusammen mit der Abziehhülse (5) und dem Pendelrollenlager (4) herausgezogen werden kann.

6. Verfahren nach Anspruch 5, **dadurch gekennzeichnet, daß** der Wellenring (6b) nach dem Entfernen des Gehäuserings (6c) axial mit Hilfe eines herkömmlichen Abziehwerkzeuges herausgezogen wird, dessen Klauen leicht hinter die innere Stirnseitenfläche des Wellenrings eingeführt werden können.

## Revendications

1. Ensemble de butée de palier d'hélice du type comprenant un roulement (4) à rouleaux sphériques disposé sur un arbre (1) et butant contre un épaulement (2), et un palier de butée sphérique (6), comprenant une rondelle arbre (6b) installée sur l'arbre, une rondelle logement (6c) placée dans un logement (3) entourant l'arbre et un ensemble de corps roulants disposé entre la rondelle arbre et la rondelle logement, une douille d'écartement disposée entre le roulement (4) à rouleaux sphériques et le palier de butée sphérique, et un élément formant couvercle (9) fixé au boîtier (3) et apte à pousser la rondelle logement (6c) contre l'ensemble de corps roulants et, par l'intermédiaire de ceux-ci, contre la rondelle arbre (6b), grâce à quoi la distance axiale entre le roulement et le palier (4, 6) est telle que leurs lignes de forces (4a, 4b ; 6a) se rencontrent en un point (7) situé sur l'axe central de l'arbre,
un élément tubulaire (12) étant disposé autour de l'arbre (1) et servant à maintenir la rondelle arbre (6b) appuyée contre l'extrémité arrière de la douille d'écartement (8) orientée à l'opposée du roulement (4) à rouleaux sphériques, lequel élément tubulaire (12) est fixé en place à l'aide d'un écrou de blocage (13) vissé sur un filetage de l'arbre,
**caractérisé en ce que** le roulement (4) à rouleaux sphériques comporte un alésage conique et est monté sur une partie conique correspondante d'un manchon de retrait (5), **en ce que** la douille d'écartement (8) comporte un filetage intérieur et est vissée sur un filetage extérieur du manchon de retrait (5).

2. Palier de butée d'hélice selon la revendication 1,
**caractérisé en ce que**
la douille d'écartement (8), sur sa surface d'extrémité la plus en arrière, comporte des évidements (16) formant une prise pour un outil à l'aide duquel on peut faire tourner la douille d'écartement (8) pour la visser dans un sens ou dans un autre sur le filetage du manchon de retrait.

3. Palier de butée d'hélice selon l'une quelconque des revendications 1 et 2,
**caractérisé en ce que**
la rondelle arbre (6b) du palier de butée sphérique (6) est installée de manière lâche sur l'arbre (1).

4. Palier de butée d'hélice selon l'une quelconque des revendications 1 et 2,
**caractérisé en ce que**
l'arbre (1) est entièrement lisse entre l'épaulement (2) et le filetage d'arbre présent sur l'arbre.

5. Procédé pour démonter un ensemble de palier de butée d'hélice selon l'une quelconque des revendications précédentes, et comprenant un roulement (4) à rouleaux sphériques disposé sur un arbre (1) et butant contre un épaulement (2), et un palier de butée sphérique (6), comportant une rondelle arbre (6b) installée sur l'arbre, une rondelle logement (6c) disposée dans un logement (3) entourant l'arbre et un ensemble de corps roulants placé entre la rondelle arbre et la rondelle logement, une douille d'écartement disposée entre le roulement (4) à rouleaux sphériques et le palier de butée sphérique, et un élément formant couvercle (9) fixé au logement (3) et conçu pour pousser la rondelle logement (6c) contre l'ensemble de corps roulants et, par l'intermédiaire de celui-ci, contre la rondelle arbre (6b), grâce à quoi la distance axiale entre le roulement et le palier (4, 6) est telle que leurs lignes de forces (4a, 4b ; 6a) se rencontrent en un point (7) situé sur l'axe central de l'arbre, et où le roulement (4) à rouleaux sphériques a un alésage conique et est monté sur un manchon de retrait (5), grâce à quoi la douille d'écartement (8) a un filetage intérieur et est vissée sur un filetage extérieur du manchon de retrait (5), et un élément tubulaire (12) est disposé autour de l'arbre (1) et est conçu pour maintenir la rondelle arbre (6b) appuyée contre l'extrémité arrière de la douille d'écartement (8) orientée à l'opposé du roulement (4) à rouleaux sphériques, lequel élément tubulaire (12) est fixé en place à l'aide d'un écrou de blocage (13) vissé sur un filetage de l'arbre,
le procédé comprenant les étapes consistant à :
tout d'abord dévisser l'écrou de blocage (13),
extraire de manière axiale l'élément formant couvercle (9) et la rondelle logement (6c),
retirer ensuite de manière axiale la rondelle arbre (6b) et l'ensemble de corps roulants,
visser ensuite la douille d'écartement (8) dont la surface orientée vers l'extérieur est alors découverte, en direction de l'intérieur, grâce à quoi son vissage avec le manchon de retrait (5) a pour effet qu'elle est tirée axialement vers l'extérieur depuis sa position dans la bague intérieure de roulement du roulement (4) à rouleaux sphériques, grâce à quoi la fonction de serrage de sa bague intérieure de roulement cesse et la douille d'écartement (8), conjointement avec le manchon de retrait (5) et le roulement (4) à rouleaux sphériques, peut être extraite.

6. Procédé selon la revendication 5,
**caractérisé en ce que**
la rondelle arbre (6b), après le retrait de la rondelle logement (6c), est extraite axialement à l'aide d'un outil de retrait classique dont les griffes peuvent être facilement introduites à l'intérieur du plan de la face latérale intérieure de la rondelle arbre.
